# EUROPÄISCHE PATENTSCHRIFT

(11) **EP 3 583 183 B1**
(45) Veröffentlichungstag und Bekanntmachung des Hinweises auf die Patenterteilung: **13.04.2022**
(21) Anmeldenummer: 18704953.1
(22) Anmeldetag: 08.02.2018
(51) Int. Cl.: C09J 183/04, B32B 7/12, B32B 27/08, B32B 27/28

(54) **MEHRSCHICHT-VERBUND ENTHALTEND PEEK FOLIEN UND EINE HAFTKLEBMASSE.**
MULTILAYER COMPOSITE CONTAINING PEEK FILMS AND A PRESSURE SENSITIVE ADHESIVE.
COMPOSITE MULTICOUCHE CONTENANT DES FILMS PEEK ET UN ADHESIF SENSIBLE A LA PRESSION.

(30) Priorität: 17.02.2017 DE 102017202621
(43) Veröffentlichungstag der Anmeldung: 25.12.2019
(73) Patentinhaber: TESA SE, 22848 Norderstedt (DE)
(72) Erfinder: BELOV, Nikolay, Arkhipovka 155700 (RU); WINKLER, Tobias, 22145 Hamburg (DE); MAATZ, Gero, 40597 Düsseldorf (DE); EGGER, Michael, 22297 Hamburg (DE); BAMBERG, Alexander, 22529 Hamburg (DE)
(74) Vertreter: tesa SE
(86) Internationale Anmeldenummer: PCT/EP2018/053141
(87) Internationale Veröffentlichungsnummer: WO 2018/149717

(56) Entgegenhaltungen:
- DATABASE WPI Week 200441 Thomson Scientific, London, GB; AN 2004-433632 XP002780009, -& JP 2004 117831 A (SHINETSU POLYMER KK) 15. April 2004 (2004-04-15)
- DATABASE WPI Week 200445 Thomson Scientific, London, GB; AN 2004-470764 XP002780010, -& JP 2004 114510 A (SHINETSU POLYMER KK) 15. April 2004 (2004-04-15)

## Beschreibung

Die vorliegende Erfindung betrifft das technische Gebiet der Haftklebmassen, wie sie vielfach in der Technik zum temporären oder dauerhaften Verbinden von Materialien und Fügeteilen eingesetzt werden. Insbesondere betrifft die Erfindung Silikon-basierende Haftklebmassen, die sich durch gute Vibrationsdämpfungseigenschaften auszeichnen.

Unter Dämpfung wird allgemein die Überführung von mechanischer Energie in so genannte Verlustwärme verstanden. Bei der akustischen Dämpfung geht es um die irreversible Umwandlung von Schallenergie in Wärme. Akustische Dämpfung - bzw. synonym Schalldämpfung oder auch Schallabsorption - kann in gasförmigen, flüssigen und festen Körpern auftreten.

Die Schallerzeugung in Mobiltelefonen und Smartphones zur Wiedergabe von Sprache, Klingeltönen, Musik etc. erfolgt durch kleine elektroakustische Wandler, sogenannte Mikrolautsprecher. Die Größe der Membranen solcher Mikrolautsprecher, die auch in Kopfhörern, Notebooks, LCD-Fernsehern oder Personal Digital Assistants (PDAs) eingesetzt werden, liegt typischerweise im Bereich von 20 mm² bis 900 mm².

Da Mikrolautsprecher aufgrund der Design-Anforderungen an die entsprechenden elektronischen Geräte immer kleiner und flacher werden, dabei aber zusätzlich mit höherer Leistung betrieben werden, nimmt die Temperaturbelastung des Mikrolautsprechers und insbesondere seiner Membran immer mehr zu. Die Membran muss deshalb aus einem Material gefertigt sein, das auch bei hohen Temperaturen und starken mechanischen Belastungen eine hohe Lebensdauer aufweist und nicht reißt. Gleichzeitig sollte das Membranmaterial aber auch gute akustische Eigenschaften aufweisen, um dem Lautsprecher eine gute Klangqualität zu verleihen.

Die allgemeinen Anforderungen an das Material einer Lautsprechermembran sind einerseits hohe Steifigkeit und geringe Dichte zur Erzeugung eines hohen Schalldrucks und der Abdeckung eines breiten Frequenzbereichs. Andererseits sollte das Material gleichzeitig eine hohe innere Dämpfung besitzen, um für einen glatten Frequenzgang zu sorgen und Verzerrungen zu minimieren. Da die Eigenschaften steif, leicht und gut gedämpft einen konstruktiven Widerspruch ergeben und nicht alle gleichzeitig erfüllt werden können (je steifer, desto geringer die Dämpfung und umgekehrt), müssen generell bei jeder Membran Kompromisse bezüglich der Steifigkeit und der Dämpfung des Membranmaterials eingegangen werden oder steife Materialien mit gut dämpfenden Materialien kombiniert werden.

US 7,726,441 B2 beschreibt eine Membran aus einem Mehrschicht-Verbund aus zwei steifen Polymerfolien und einer zwischen diesen Folien liegenden dämpfenden KlebmasseSchicht.

Die Schriften DE 10 2007 030 665 A1 und US 8,141,676 B2 beschreiben jeweils einen fünfschichtigen Verbund, in dem zwei Außenschichten und eine Mittelschicht durch einen thermoplastischen Kleber beziehungsweise einen acrylischen Kleber voneinander getrennt sind. In solchen Mehrschicht-Membranen werden für die beiden klebenden Schichten jeweils die gleichen Klebmassen in den gleichen Dicken verwendet. Dies ist darin begründet, dass die Membran im Lautsprecher möglichst symmetrisch und gleichmäßig schwingen sollte und ein asymmetrischer Aufbau in Bezug auf die dämpfenden KlebmasseSchichten leicht zu Verzerrungen führen kann; wodurch die erzeugte Klangqualität gemindert würde. Weiterhin können die akustischen Eigenschaften eines Lautsprechers stark davon abhängen, mit welcher Seite verwendete Membranen asymmetrischen Aufbaus an der Spule befestigt werden. Daher haben sich symmetrische Membranen in der Verwendung für Lautsprecher durchgesetzt, um zu vermeiden, dass es durch fehlerhaften Einbau der Membran zu Qualitätsabweichungen kommt.

Generell lässt sich feststellen, dass Klebmassen im Stand der Technik als vibrationsdämpfendes Material, beispielsweise in den oben erwähnten Kombinationen von steifen mit gut dämpfenden Materialien, verwendet werden.

US 5,464,659 beschreibt ein Verfahren zur Vibrationsdämpfung eines Gegenstands, welches die Anwendung eines vibrationsdämpfenden Materials aus 5 bis 95 % Acrylmonomer(en) und 95 bis 5 % eines Silikonklebstoffes auf dem Gegenstand vorsieht, wobei die Summe der beiden Komponenten 100 % ergibt.

Der Einsatz von Klebmassen, insbesondere von Silikon-basierenden Klebmassen, als vibrationsdämpfende Komponente ist nicht auf Lautsprechermembranen beschränkt. So beschreibt US 2014/0017491 A1 eine Silikonklebmasse, die vor dem Aushärten ein Silikonelastomer, ein Silikonharz, ein Reaktionsprodukt aus einem Silikonelastomer und einem Silikonharz, einen Silikon-Hydrid-Vernetzer und einen Platin-Katalysator umfasst. Eine daraus erhaltene Klebmasse wird in einem Transfertape zum Verbinden von Bremsen-Komponenten eingesetzt, beispielsweise zum Verbinden von Bremsscheibe und Bremsbelag.

EP 1 018 725 A2 beschreibt ein Verfahren zum Entdröhnen eines Blechteils, zum Beispiel eines Fahrzeug-Karosserieteils, durch Herstellen einer Schraub-, Niet- oder Schweißverbindung eines Metallblechs mit dem zu entdröhnenden Blechteil unter Zwischenschaltung einer Kleberschicht. Als Kleberschicht für den Einsatz bei Blechteilen im Temperaturbereich zwischen -20 °C und +50 °C wird dabei ein Polyacrylsäuresester-Copolymerisat und für den Einsatz bei höheren Temperaturen im Bereich von 0 °C bis 100 °C ein vernetzter Silikonkleber verwendet. Durch die Schraub-, Niet- oder Schweißverbindung wird die Energie des schwingenden Blechteiles im hohen Maße in das Sandwich aus zumindest einer Kleberschicht und zumindest einem Metallblech geleitet, so dass das Sandwich in der Lage ist, einen hohen Schwingungsenergieanteil in Wärme umzuwandeln.

EP 1 035 345 A2 beschreibt ein Dämpfungsblech zur Befestigung auf einer Trägerplatte eines Bremsbackens einer Scheibenbremse, welches auf der dem Bremsbacken zugewandten inneren Seite eine selbstklebende Dämpfungsschicht hat.

JP 2004 117831 A beschreibt eine dämpfende Zusammensetzung, die durch Härtung einer Silikonzusammensetzung erhalten wird, die ein Organopolysiloxan mit 0,5 oder mehr Sigebundenen Alkenylgruppen, ein Organo-Wasserstoff-Polysiloxan mit zwei oder mehr Sigebundenen H-Atomen und einen Härtungskatalysator umfasst.

JP 2004 114510 A hat ein Schichtmaterial aus alternierend angeordneten transparenten Substratschichten und transparenten, elastischen Klebschichten zum Gegenstand, wobei letztere aus einem vernetzten Organosiloxan-Material bestehen und sich zu einer Gesamtdicke von 1 bis 5 mm aufaddieren.

Es besteht ein anhaltender Bedarf an vielseitig einsetzbaren Klebmassen mit guten Vibrationsdämpfungseigenschaften. Aufgabe der vorliegenden Erfindung ist es, eine einfach anwendbare Klebmasse mit guten vibrationsdämpfenden Eigenschaften zur Verfügung zu stellen, die über ein weites Temperaturspektrum hinweg einstellbar und vorhanden sind, wobei die Klebmasse daneben eine ausreichende mechanische Stabilität gerade bei erhöhten Temperaturen aufweist.

Der Lösung der Aufgabe liegt der Gedanke zugrunde, eine gezielt untervernetzte, Silikon-basierende Haftklebmasse einzusetzen. Ein erster, allgemeiner Gegenstand der Erfindung ist ein Mehrschicht-Verbund, der zwei Folien, deren Hauptbestandteil ein Polyetheretherketon ist; und eine Haftklebmasse, die erhältlich ist durch thermische Vernetzung einer Zusammensetzung, die
a) mindestens ein Silikon, das mindestens zwei Alkenylgruppen enthält;
b) mindestens ein Silikonharz;
c) mindestens eine zur Vernetzung Alkenylgruppen enthaltender Silikone geeignete Substanz, die mindestens zwei Si-H-Gruppen enthält; und
d) mindestens eine zur Beschleunigung einer Reaktion der Si-H- mit den Alkenylgruppen geeignete Substanz
enthält und dadurch gekennzeichnet ist, dass das stoffmengenbezogene Verhältnis der Summe der Si-H-Gruppen zur Summe der durch die Silikone a) und Silikonharze b) zur Verfügung gestellten Alkenylgruppen kleiner als 1:1 ist, umfasst. Bevorzugt weist die aus der Zusammensetzung hergestellte Haftklebmasse bei Belastung mit 1.000 g einen Scherweg (23 °C, 15 min) auf, der um mindestens 5 %, besonders bevorzugt um mindestens 10 % und insbesondere um mindestens 20 % länger ist als der für diese Haftklebmasse unter identischen Messbedingungen minimal erzielbare Scherweg.

Unter einer Haftklebmasse bzw. synonym einem Haftklebstoff wird erfindungsgemäß, wie im allgemeinen Sprachgebrauch üblich, ein Stoff verstanden, der - insbesondere bei Raumtemperatur - dauerhaft klebrig sowie klebfähig ist. Charakteristisch für einen Haftklebstoff ist, dass er durch Druck auf ein Substrat aufgebracht werden kann und dort haften bleibt, wobei der aufzuwendende Druck und die Einwirkdauer dieses Drucks allgemein nicht näher definiert werden. In manchen Fällen, abhängig von der genauen Art des Haftklebstoffs, der Temperatur und der Luftfeuchtigkeit sowie vom Substrat, reicht die Einwirkung eines kurzfristigen, minimalen Drucks, der über eine leichte Berührung für einen kurzen Moment nicht hinausgeht, um den Haftungseffekt zu erzielen. In anderen Fällen kann auch eine längerfristige Einwirkdauer eines hohen Drucks notwendig sein.

Haftklebmassen haben besondere, charakteristische viskoelastische Eigenschaften, die zu der dauerhaften Klebrigkeit und Klebfähigkeit führen. Kennzeichnend für sie ist, dass, wenn sie mechanisch deformiert werden, es sowohl zu viskosen Fließprozessen als auch zum Aufbau elastischer Rückstellkräfte kommt. Beide Prozesse stehen hinsichtlich ihres jeweiligen Anteils in einem bestimmten Verhältnis zueinander, abhängig sowohl von der genauen Zusammensetzung, der Struktur und dem Vernetzungsgrad des Haftklebstoffes als auch von der Geschwindigkeit und Dauer der Deformation sowie von der Temperatur.

Der anteilige viskose Fluss ist zur Erzielung von Adhäsion notwendig. Die viskosen Anteile, hervorgerufen durch Makromoleküle mit relativ großer Beweglichkeit, ermöglichen eine gute Benetzung und ein gutes Anfließen auf das zu verklebende Substrat. Ein hoher Anteil an viskosem Fluss führt zu einer hohen Haftklebrigkeit (auch als Tack oder Oberflächenklebrigkeit bezeichnet) und damit oft auch zu einer hohen Klebkraft. Stark vernetzte Systeme, kristalline oder glasartig erstarrte Polymere sind mangels fließfähiger Anteile in der Regel nicht oder zumindest nur wenig haftklebrig.

Die anteiligen elastischen Rückstellkräfte sind zur Erzielung von Kohäsion notwendig. Sie werden zum Beispiel durch sehr langkettige und stark verknäuelte sowie durch physikalisch oder chemisch vernetzte Makromoleküle hervorgerufen und ermöglichen die Übertragung der auf eine Klebverbindung angreifenden Kräfte. Sie führen dazu, dass eine Klebverbindung einer auf sie einwirkenden Dauerbelastung, zum Beispiel in Form einer dauerhaften Scherbelastung, in ausreichendem Maße über einen längeren Zeitraum standhalten kann.

Zur genaueren Beschreibung und Quantifizierung des Maßes an elastischem und viskosem Anteil sowie des Verhältnisses der Anteile zueinander können die mittels Dynamisch Mechanischer Analyse (DMA) ermittelbaren Größen Speichermodul (G') und Verlustmodul (G") herangezogen werden. G' ist ein Maß für den elastischen Anteil, G" ein Maß für den viskosen Anteil eines Stoffes. Beide Größen sind abhängig von der Deformationsfrequenz und der Temperatur.

Die Größen können mit Hilfe eines Rheometers ermittelt werden. Das zu untersuchende Material wird dabei zum Beispiel in einer Platte-Platte-Anordnung einer sinusförmig oszillierenden Scherbeanspruchung ausgesetzt. Bei schubspannungsgesteuerten Geräten werden die Deformation als Funktion der Zeit und der zeitliche Versatz dieser Deformation gegenüber dem Einbringen der Schubspannung gemessen. Dieser zeitliche Versatz wird als Phasenwinkel δ bezeichnet.

Der Speichermodul G' ist wie folgt definiert: G' = (τ/γ) •cos(δ) (τ = Schubspannung, γ = Deformation, δ = Phasenwinkel = Phasenverschiebung zwischen Schubspannungs- und Deformationsvektor). Die Definition des Verlustmoduls G" lautet: G" = (τ/γ) •sin(δ) (τ = Schubspannung, γ = Deformation, δ = Phasenwinkel = Phasenverschiebung zwischen Schubspannungs- und Deformationsvektor).

Ein Stoff gilt im Allgemeinen als haftklebrig und wird im Sinne der Erfindung als haftklebrig definiert, wenn bei Raumtemperatur, hier definitionsgemäß bei 23°C, im Deformationsfrequenzbereich von 10° bis 10¹ rad/sec G' zumindest zum Teil im Bereich von 10³ bis 10⁷ Pa liegt und wenn G" ebenfalls zumindest zum Teil in diesem Bereich liegt. "Zum Teil" bedeutet, dass zumindest ein Abschnitt der G'-Kurve innerhalb des Fensters liegt, das durch den Deformationsfrequenzbereich von einschließlich 10° bis einschließlich 10¹ rad/sec (Abszisse) sowie den Bereich der G'-Werte von einschließlich 10³ bis einschließlich 10⁷ Pa (Ordinate) aufgespannt wird. Für G" gilt dies entsprechend.

Aus der hierin offenbarten Zusammensetzung lassen sich - im Wesentlichen durch Entfernen des Lösemittels und Vernetzung der Zusammensetzung - Haftklebmassen herstellen, die über einen weiten Temperaturbereich hinweg sehr gute Dämpfungseigenschaften aufweisen, die sich gezielt einstellen lassen. Gleichzeitig zeigen die Haftklebmassen gute mechanische Stabilität bei hohen Temperaturen, insbesondere bei Temperaturen bis zu 170 °C. Sowohl die Temperatur, bei der das Maximum der dämpfenden Wirkung erreicht wird, als auch die Stärke des Dämpfungseffekts selber lassen sich einstellen. Die Zusammensetzungen bzw. daraus hergestellte Haftklebmassen können also vorteilhaft überall dort verwendet werden, wo Dämpfung, insbesondere akustische Dämpfung, auch bei hohen Temperaturen bewirkt werden muss. Sie eignen sich besonders gut zur Verklebung von Folien für Lautsprechermembranen und zur Verklebung von Komponenten von Bremssystemen.

Hierin offenbart wird auch eine Haftklebmasse, die durch thermische Vernetzung einer vorstehend offenbarten Zusammensetzung erhältlich ist.

Die hierin offenbarte Zusammensetzung enthält als Komponente a) mindestens ein Silikon. Bevorzugt ist das Silikon a) ein Polymer, basierend auf Siloxan-Einheiten gemäß der allgemeinen Formel (1)

(1) (R₃SiO_{1/2})ₙ(R₂SiO)ₘ(RSiO_{3/2})ₒ(SiO₂)ₚ,

worin die Reste R unabhängig voneinander für Alkyl-, Aryl-, Polydiorganosiloxy- oder Alkenylreste sowie zu 0 bis 10 %, bezogen auf die Anzahl aller Reste R, für OH-Gruppen stehen und n, m > 0 sowie o, p ≥ 0 gilt. Erfindungsgemäß sind mindestens zwei Alkenylgruppen enthalten. Die Formel (1) ist keine Strukturformel und gibt insofern nur die Zusammensetzung des Silikons aus den Siloxan-Einheiten, nicht jedoch deren Verknüpfung untereinander wieder.

Bevorzugt ist das Silikon a) ein lineares Polymer gemäß der allgemeinen Formel (2)

(2) R'₃Si-O⁻(SiR'₂-O)m-SiR'₃,

worin die Reste R' unabhängig voneinander für Alkyl-, Phenyl- oder Alkenylreste sowie zu 0 bis 10 %, bezogen auf die Anzahl aller Reste R', für OH-Gruppen stehen, wobei mindestens zwei Reste R' für Alkenylgruppen stehen. Grundsätzlich können die Reste R' in allen denkbaren und chemisch möglichen Konstellationen über das lineare Silikon verteilt sein. Bekannt sind beispielsweise Polydimethylsiloxane, Poly(methylphenyl)siloxane und Poly(dimethylsiloxan/diphenylsiloxan)-Copolymere. Sofern die Alkenylgruppen nicht (nur) endständig, sondern (auch) innerhalb der Polymerketten der vorgenannten Silikone angeordnet sind, handelt es sich insoweit nicht um reine Polydimethylsiloxane, Poly(methylphenyl)siloxane, Poly(dimethylsiloxan/diphenylsiloxan)-Copolymere etc. Erfindungsgemäß werden diese Silikone - den fachmännischen Gepflogenheiten entsprechend - dennoch wie vorstehend bezeichnet.

Bevorzugt stehen die Reste R' in der allgemeinen Formel (2) unabhängig voneinander für Methyl-, Ethyl-, Phenyl- oder Alkenylreste, wobei mindestens zwei Reste R' für Alkenylreste stehen. Besonders bevorzugt ist das Silikon ein Polydimethylsiloxan, ein Poly(methylphenyl)siloxan oder ein Dimethylsiloxan-Diphenylsiloxan-Copolymer. Insbesondere ist das Silikon a) ein Polydimethylsiloxan. Die Formel (2) ist eine Strukturformel, gibt also auch die Verknüpfung der Siloxan-Einheiten untereinander wieder.

Die Variable "m" in der Formel (2) steht bevorzugt für Werte von 2000 bis 6000, stärker bevorzugt von 2600 bis 4900.

Das mindestens eine Silikon der Komponente a) enthält mindestens zwei Alkenylgruppen. Über die Alkenylgruppen wird die Vernetzung der Zusammensetzung ermöglicht, indem die Si-H-Gruppen der Vernetzersubstanz an die Alkenylgruppen der Silikonmakromoleküle addieren. Bevorzugt enthalten die Alkenylgruppen des Silikons 2-10 C-Atome. Besonders bevorzugt sind die Alkenylgruppen des Silikons unabhängig voneinander ausgewählt aus der Gruppe bestehend aus Vinyl-, Propenyl-, Allyl-, Butenyl- Pentenyl-, Hexenyl-, Heptenyl-, Octenyl-, Nonenyl und Decenylgruppen. Diese Gruppen sind besonders reaktiv und ermöglichen somit eine effiziente Vernetzung. Besonders bevorzugt umfassen die Alkenylgruppen des Silikons Vinylgruppen. Insbesondere sind die Alkenylgruppen des Silikons Vinylgruppen. Mit Vinylgruppen lässt sich die Vernetzung am effizientesten durchführen.

Die gewichtsmittlere Molmasse Mw des mindestens einen Silikons a) beträgt bevorzugt 31.000 - 2.000.000 g/mol.

Silikone a) sind in der hierin offenbarten Zusammensetzung bevorzugt zu insgesamt 10 bis 90 Gew.-%, bezogen auf den Feststoffanteil der Zusammensetzung, enthalten. Es können ein Silikon a) oder eine Mischung verschiedener Silikone a) enthalten sein. Stärker bevorzugt sind Silikone a) in der Zusammensetzung zu insgesamt 20 bis 70 Gew.-%, insbesondere zu insgesamt 30 bis 60 Gew.-% enthalten, jeweils bezogen auf den Feststoffanteil der Zusammensetzung.

Neben dem oder den Silikon(en) a) können weitere Silikone in der hierin offenbarten Zusammensetzung enthalten sein, die keine Alkenylgruppen enthalten. Dabei kann es sich beispielsweise um reine Polydimethylsiloxane handeln.

Die hierin offenbarte Zusammensetzung enthält mindestens ein Silikonharz als Komponente b). Das mindestens eine Silikonharz b) ist bevorzugt ausgewählt aus MQ-, MTQ-, TQ-, MT- und MDT-Harzen. Es können erfindungsgemäß auch Gemische verschiedener Silikonharze b) in der Zusammensetzung enthalten sein, insbesondere Gemische der vorstehend genannten Silikonharze. Besonders bevorzugt ist das mindestens eine Silikonharz b) ein MQ-Harz. MQ-Silikonharze sind gut verfügbar und zeichnen sich durch sehr gute Stabilität aus. Ganz besonders bevorzugt sind, sofern mehrere Silikonharze in der Zusammensetzung enthalten sind, alle Silikonharze der Zusammensetzung MQ-Harze.

Die gewichtsmittlere Molmasse Mw des mindestens einen Silikonharzes b) beträgt bevorzugt 500 - < 30.000 g/mol. Das Harz kann Alkenylgruppen enthalten. Geeignete Silikonharze sind z.B. DC 2-7066 von Dow Corning; MQ Resin VSR6201 von Chenguang Fluoro & Silicone Elastomers Co., Ltd.; MQ-RESIN POWDER 803 TF von Wacker Silicones; SR 545 von Momentive Performance Materials oder Silmer VQ9XYL und Silmer Q9XYL von Siltech.

Die Temperatur, bei welcher der Quotient aus Verlustmodul (G") und Speichermodul (G') (tan δ) der Haftklebmasse des erfindungsgemäßen Mehrschicht-Verbundes seinen Maximalwert erreicht, lässt sich durch Variation des Harzgehalts einstellen. Hierin offenbart wird daher auch ein Verfahren zum Einstellen der Temperatur, bei welcher der Quotient aus Verlustmodul (G") und Speichermodul (G') (tan δ) einer durch thermische Vernetzung einer hierin offenbarten Zusammensetzung erhältlichen Haftklebmasse seinen Maximalwert erreicht (T_{tan δ max}), wobei T_{tan δ max} mittels Änderung der Silikonharzkonzentration bei ansonsten gleichbleibenden Mengenverhältnissen eingestellt wird.

Generell lässt sich sagen, dass dabei eine Erhöhung der Silikonharzkonzentration eine Verschiebung des tan δ - Maximums zu höheren Temperaturen bewirkt. Unter "Silikonharzkonzentration" wird für den Fall, dass mehrere Silikonharze in der Zusammensetzung enthalten sind, selbstverständlich die Gesamtkonzentration an Silikonharzen verstanden. Bevorzugt erfolgt die Änderung der Silikonharzkonzentration im Rahmen des offenbarten Verfahrens in den Grenzen eines Gesamtgehalts an Silikonharz(en) von 8 bis 80 Gew.-%, bezogen auf die Gesamtmenge an Silikonen und Silikonharzen der Zusammensetzung.

Das offenbarte Verfahren ermöglicht eine Abstimmung der aus der Zusammensetzung erhältlichen Silikon-Haftklebmasse auf den für den beabsichtigten Einsatz zu erwartenden Temperaturbereich. Durch einfache Testreihen lässt sich so eine Masse mit optimalen, insbesondere akustischen Dämpfungseigenschaften, die im tan δ - Maximum am stärksten ausgeprägt sind, herstellen. Weiter wird es möglich, eine vorab präparierte Grundrezeptur durch Zugabe einer entsprechenden Menge Silikonharz b) sehr einfach auf eine zu erwartende Temperatur "zuzuschneiden".

Bevorzugt beträgt der Anteil der Gesamtheit aller Silikonharze b) an der Gesamtheit aller Silikone a) und aller Silikonharze b) maximal 90 Gew.-%, besonders bevorzugt maximal 75 Gew.-%, insbesondere maximal 60 Gew.-%. Ebenfalls bevorzugt beträgt der Anteil der Gesamtheit aller Silikonharze b) an der Gesamtheit aller Silikone a) und aller Silikonharze b) mindestens 30 Gew.-%, besonders bevorzugt mindestens 40 Gew.-%, insbesondere mindestens 50 Gew.-%.

Die hierin offenbarte Zusammensetzung enthält weiter mindestens eine zur Vernetzung Alkenylgruppen enthaltender Silikone geeignete Substanz, die mindestens zwei reaktive Si-H-Gruppen enthält (Si-H-Vernetzer). Unter "reaktiven Si-H-Gruppen" werden Si-H-Gruppen verstanden, die an eine C=C-Doppelbindung eines Silikons a) und/oder eines Harzes b) der Zusammensetzung addieren können. Die Natur des Si-H-Vernetzers ist grundsätzlich unkritisch, solange er seine Vernetzungsfunktion erfüllt und die Leistungsstärke der aus der Zusammensetzung herstellbaren Haftklebmasse nicht negativ beeinflusst.

Die hierin offenbarte Zusammensetzung enthält ferner mindestens eine zur Beschleunigung einer Reaktion der Si-H- mit den Alkenylgruppen geeignete Substanz. Die mindestens eine zur Beschleunigung einer Reaktion der Si-H- mit den Alkenylgruppen geeignete Substanz ist bevorzugt Platin oder eine Platinverbindung, wie zum Beispiel der Karstedt-Katalysator (eine Pt(0)-Komplexverbindung), oder eine Rhodiumverbindung.

Erfindungsgemäß bevorzugt weist die aus der hierin offenbarten Zusammensetzung hergestellte Haftklebmasse einen Scherweg (1000 g) auf, der um mindestens 5 % länger ist als der für diese Haftklebmasse minimal erzielbare Scherweg. Ein derartiger, gegenüber dem theoretisch erreichbaren Scherweg längerer Scherweg indiziert eine Untervernetzung der Zusammensetzung. Dies bedeutet, dass die Silikone a) bzw. die auch die Silikonharze b) nicht bis zum theoretisch - aufgrund der Anzahl vorhandener Alkenylgruppen - erreichbaren Grad vernetzt werden, sondern nur soweit, wie Si-H-Gruppen zur Verfügung stehen. Bei vollständiger Abreaktion aller durch die Silikone a) und Silikonharze b) zur Verfügung gestellten Alkenylgruppen würde der Scherweg ein Plateau erreichen, sich also auf ein nicht mehr reduzierbares Minimum einstellen. Durch eine solche für Haftklebmassen unübliche Untervernetzung können hohe Maximalwerte für den Quotienten aus Verlustmodul (G") und Speichermodul (G') (G"/G' = tan δ) der aus der Zusammensetzung erhältlichen Haftklebmasse realisiert werden, was zu hervorragenden Dämpfungseigenschaften führt.

Der Scherweg wird erfindungsgemäß bestimmt, indem zunächst ein aus der betreffenden Haftklebmasse geschnittenes Transferklebeband (Länge 50 mm, Breite 10 mm) auf eine mit Aceton gereinigte Stahl-Prüfplatte verklebt wird, so dass die Stahlplatte das Klebeband rechts und links überragt und das Klebeband die Prüfplatte am oberen Rand um 2 mm überragt. Die Verklebungsfläche der Probe beträgt Höhe x Breite = 13mm x 10mm. Die Verklebungsstelle wird anschließend mit einer 2 kg-Stahlrolle in einer Geschwindigkeit von 10 m/min sechsmal überrollt. Das Klebeband wird bündig mit einem stabilen Klebestreifen verstärkt, der als Auflage für den Wegmessfühler dient. Die Probe wird mittels der Prüfplatte senkrecht aufgehängt.

Das zu messende Probenmuster wird dann am unteren Ende mit einem Gewicht von 1000 g belastet. Die Prüfung erfolgt im Normklima, d.h. bei 23 °C und 50 % relativer Feuchte, die Prüfdauer beträgt 15 Minuten Die Scherstrecke nach Ablauf der Testdauer bei konstanter Temperatur wird als Ergebnis in µm angegeben.

Bevorzugt enthält die hierin offenbarte Zusammensetzung mindestens ein Lösemittel. Das Lösemittel ist bevorzugt ausgewählt aus aromatischen und aliphatischen Kohlenwasserstoffen, insbesondere aus Toluol, Xylol und Benzin, aus aprotischen Carbonylverbindungen, insbesondere aus Ketonen, Estern und Ethern sowie aus reaktionsträgen protischen Lösemitteln, insbesondere Isopropanol.

Zusätzlich zu dem bzw. den Basispolymer(en), dem bzw. den Silikonharz(en) und den weiteren bisher aufgeführten Bestandteilen können in der hierin offenbarten Zusammensetzung weitere Bestandteile im Sinne von Hilfs- und Zuschlagstoffen, z.B. Verankerungshilfen; organische und/oder anorganische Pigmente; Füllstoffe wie Ruß, Graphit oder Carbon-Nanotubes und organische und/oder anorganische Partikel (z.B. Polymethylmethacrylat (PMMA), Bariumsulfat oder Titanoxid (TiO2)) enthalten sein.

In einer Ausführungsform der Erfindung enthält die hierin offenbarte Zusammensetzung jeweils unabhängig voneinander 0,1 bis 5 Gewichtsteile einer oder mehrerer Verankerungshilfen und/oder eines oder mehrerer Pigmente und/oder 0,1 bis 50 Gewichtsteile eines oder mehrerer Füllstoffe, jeweils bezogen auf 100 Gewichtsteile der Gesamtheit an Silikon(en) (Basispolymer(en)) und Silikonharz(en).

In einer weiteren Ausführungsform ist die Zusammensetzung frei von jeglichen über die Komponenten a) bis d) und eines oder mehrere Lösemittel hinausgehenden Bestandteilen.

Hierin offenbart wird auch ein Verfahren zur Herstellung einer Haftklebmasse, umfassend die thermische Vernetzung einer hierin offenbarten Zusammensetzung.

Ebenfalls offenbart wird eine Haftklebmasse, die durch thermische Vernetzung einer hierin offenbarten Zusammensetzung erhältlich ist.

Unter "thermischer Vernetzung" wird hier die unter den vorliegenden, insbesondere aus der Zusammensetzung der Masse und den daraus resultierenden theoretisch zur Verfügung stehenden Verknüpfungsstellen sich ergebenden, ansonsten den für die Vernetzung von Silikonhaftklebmassen üblichen Verhältnissen entsprechenden, Bedingungen maximal erreichbare Vernetzung unter dem Einfluss von Wärme verstanden. Bevorzugt beträgt der Maximalwert des Quotienten aus Verlustmodul (G") und Speichermodul (G') (tan δ, gemessen bei 10 rad/s) der Haftklebmasse im Temperaturbereich zwischen - 60 °C und 170 °C von 0,5 bis 2,1; insbesondere ist er gleich oder größer als 0,8; ganz besonders bevorzugt gleich oder größer als 1. In diesem Bereich werden hervorragende - insbesondere akustische - Dämpfungseigenschaften erhalten.

Ebenfalls bevorzugt umfasst der Temperaturbereich innerhalb der Spanne von - 60 °C bis 170 °C, in dem der tan δ der betreffenden Haftklebmasse mindestens 0,5 beträgt, mindestens 80 K, stärker bevorzugt mindestens 150 K. Weiter umfasst bevorzugt der Temperaturbereich innerhalb der Spanne von - 60 °C bis 170 °C, in dem der tan δ der betreffenden Haftklebmasse mindestens 0,8 beträgt, mindestens 30 K, stärker bevorzugt mindestens 60 K.

Zur Verklebung von Lautsprechermembranen wird die Haftklebmasse bevorzugt in einer Schichtdicke von 5 bis 30 µm auf eine Folie beschichtet, beispielsweise mittels Direktbeschichtung oder Laminierung, und dann wird die andere Folie auf die freie Klebmassenseite aufgebracht.

Ein erfindungsgemäßer Mehrschicht-Verbund lässt sich besonders vorteilhaft als akustische Membran im vorstehenden Sinne einsetzen.

### Beispiele

### Messmethode

### - Dynamisch Mechanische Analyse

Gerät: deformationsgesteuertes Rheometer (ARES), Platte-Platte, ø 25 mm
Deformation: 1 %
Frequenz: 10 rad/s
Temperatursweep: siehe Tabelle 2

### - Scherweg

Ein aus der betreffenden Haftklebmasse geschnittenes Transferklebeband (Länge 50 mm, Breite 10 mm) wurde auf eine mit Aceton gereinigte Stahl-Prüfplatte verklebt, so dass die Stahlplatte das Klebeband rechts und links überragte und das Klebeband die Prüfplatte am oberen Rand um 2 mm überragte. Die Verklebungsfläche der Probe betrug Länge × Breite = 13mm × 10mm. Die Verklebungsstelle wurde anschließend mit einer 2 kg-Stahlrolle in einer Geschwindigkeit von 10 m/min sechsmal überrollt. Das Klebeband wurde bündig mit einem stabilen Klebestreifen verstärkt, der als Auflage für den Wegmessfühler diente. Die Probe wurde mittels der Prüfplatte senkrecht aufgehängt.

Das zu messende Probenmuster wurde dann am unteren Ende mit einem Gewicht von 1000 g belastet. Die Prüfung erfolgte im Normklima, d.h. bei 23 °C und 50 % relativer Feuchte, die Prüfdauer betrug 15 Minuten Die Scherstrecke nach Ablauf der Testdauer bei konstanter Temperatur ist als Ergebnis in µm angegeben.

### - Klebkraft Stahl:

Die Bestimmung der Klebkraft Stahl erfolgte bei einem Prüfklima von 23 °C +/- 1 °C Temperatur und 50 % +/- 5 % rel. Luftfeuchte. Die Klebebandmuster wurden auf 20 mm Breite zugeschnitten und auf eine Stahlplatte geklebt. Die Stahlplatte wurde vor der Messung gereinigt und konditioniert. Dazu wurde die Platte zunächst mit Aceton abgewischt und danach 5 Minuten an der Luft liegen gelassen, damit das Lösungsmittel abdampfen konnte.

Die dem Prüfuntergrund abgewandte Seite des Klebebandmusters wurde dann mit einer 50 µm - Aluminiumfolie abgedeckt, wodurch verhindert wurde, dass sich das Muster bei der Messung dehnte. Danach erfolgte das Anrollen des Prüfmusters auf den Stahluntergrund. Hierzu wurde das Klebeband mit einer 2 kg Rolle 5mal hin und her bei einer Aufrollgeschwindigkeit von 10 m/min überrollt. Unmittelbar nach dem Anrollen wurde die Stahlplatte in eine spezielle Halterung geschoben, die es ermöglichte, das Muster in einem Winkel von 90 ° senkrecht nach oben abzuziehen. Die Klebkraftmessung erfolgte mit einer Zwick-Zugprüfmaschine.

Die Messergebnisse sind in N/cm angegeben und sind gemittelt aus drei Messungen.

### Zusammensetzungen

Eingesetzte Chemikalien:

| | |
|---|---|
| Dow Corning^{®} 7651 | - Vinylgruppen enthaltendes Polydimethylsiloxan + MQ-Harz (Gewichtsverhältnis PDMS/MQ-Harz 70:30), 46-%ige Lösung in Toluol |
| Dow Corning^{®} 7066 | - MQ-Silikonharz, 62-%ige Lösung in Toluol |
| Syl-Off^{®} 7678 | - Si-H-Vernetzer, 100-%ig |
| Syl-Off^{®} 4000 | - Platin-Katalysator-Zubereitung, 100-%ig |

Allgemeine Anleitung zur Formulierung einer hierin offenbarten Zusammensetzung bzw. zur Herstellung von Haftklebmassen aus diesen:

Die angegebene Menge (Mengen siehe Tabelle 1) DC 7651 wurde mit den jeweils angegebenen Mengen DC 7066, Syl-Off 7678 und Syl-Off 4000 versetzt. Die Mischung wurde mit 10 ml Toluol verdünnt und 30 Minuten mit dem Magnetrührer homogenisiert. Die entstandene Mischung wurde in Form einer Schicht von 50 g/m² (für Messungen des Scherwegs und der Klebkraft) bzw. 500 g/m² (für Dynamisch Mechanische Analyse) auf einem Fluorosilikon-PET-Liner aufgebracht und bei 100 °C für 10 Minuten vernetzt. In der Tabelle 1 sind die Formulierungen aufgelistet.

**Tabelle 1: Zusammensetzungen zur Herstellung von Haftklebmassen**

| Nr. | Menge DC 7651 (g) | Menge DC 7066 (g) | Menge Syl-Off 7678 (g) | Menge Syl-Off 4000 (g) |
|---|---|---|---|---|
| 1 (Vgl.) | 98,53 | 39,36 | 7,61 | 0,78 |
| 2 (Vgl.) | 98,55 | 39,38 | 6,08 | 0,77 |
| 3 (Vgl.) | 98,54 | 39,50 | 4,64 | 0,78 |
| 4 | 98,60 | 40,08 | 0,225 | 0,70 |
| 5 | 98,56 | 39,74 | 0,123 | 0,71 |
| 6 | 98,56 | 39,77 | 0,069 | 0,71 |

| | | | | |
|---|---|---|---|---|
| Vgl. = Vergleichsbeispiel | | | | |

Von den aus den Zusammensetzungen 1 bis 6 erhaltenen Haftklebmassen wurden der Scherweg, die Klebkraft auf Stahl sowie der Maximalwert des tan δ im Temperaturbereich von - 60 °C bis 165 °C bestimmt. Die jeweiligen Werte sind in Tabelle 2 enthalten. Darüber hinaus wurden im vorstehenden Temperaturbereich die tan δ - Werte in 15 K - Intervallen ermittelt. Aus diesen, in Tabelle 3 enthaltenen Werten ergab sich durch Auftrag entsprechender Kurven gegen die Temperatur der Temperaturbereich, in dem tan δ jeweils mindestens 0,5 bzw. mindestens 0,8 betrug.

**Tabelle 2: Ergebnisse Scherweg, Klebkraft und DMA**

| | Vernetzeranteil (Gew.-%, bezogen auf Silikon + MQ-Harz) | Scherweg (µm) [1000 g] | Klebkraft Stahl [N/cm] | tan δ - Maximum | 0.8 tan δ | 0.5 tan δ |
|---|---|---|---|---|---|---|
| Hkm 1 | 10,8 | 52 | 0,76 | 0,55 | - | 16 |
| Hkm 2 | 8,6 | 48 | 0,83 | 0,57 | - | 32 |
| Hkm 3 | 6,6 | 53 | 0,80 | 0,6 | - | 48 |
| Hkm 4 | 0,3 | 407 | 2,90 | 0,89 | 35 | 82 |
| Hkm 5 | 0,2 | 1612 | 3,78 | 1,3 | 70 | 162 |
| Hkm 6 | 0,1 | >2000 | 4,16 | 1,56 | 185 | >200 |

| | | | | | | |
|---|---|---|---|---|---|---|
| Hkm = Haftklebmasse, die Nummer entspricht der zugrundeliegenden Zusammensetzung aus Tabelle 1 | | | | | | |

**Tabelle 3: Temperaturverlauf tan δ**

| | Hkm 1 | Hkm 2 | Hkm 3 | Hkm 4 | Hkm 5 | Hkm 6 |
|---|---|---|---|---|---|---|
| Gewichtsverhältnis Silikon/MQ-Harz (Feststoff) | 4:5 | 4:5 | 4:5 | 4: 5 | 4:5 | 4:5 |
| Temperatur (°C) | G"/G' = tan δ | | | | | |
| - 60 | 0,02 | 0,02 | 0,02 | 0.26 | 0.21 | 0.29 |
| - 45 | 0,15 | 0,16 | 0,18 | 0.36 | 0.32 | 0.4 |
| - 30 | 0,25 | 0,27 | 0,30 | 0.5 | 0.52 | 0.59 |
| - 15 | 0,39 | 0,41 | 0,43 | 0.68 | 0.79 | 0.86 |
| 0 | 0,48 | 0,51 | 0,54 | 0.85 | 1.11 | 1.24 |
| 15 | 0,55 | 0,57 | 0,60 | 0.89 | 1.3 | 1.56 |
| 30 | 0,48 | 0,50 | 0,53 | 0.75 | 1.21 | 1.56 |
| 45 | 0,40 | 0,42 | 0,44 | 0.55 | 0.96 | 1.36 |
| 60 | 0,30 | 0,33 | 0,35 | 0.38 | 0.76 | 1.19 |
| 75 | 0,21 | 0,23 | 0,26 | 0.26 | 0.64 | 1.13 |
| 90 | 0,11 | 0,14 | 0,17 | 0.2 | 0.56 | 1.12 |
| 105 | 0,09 | 0,11 | 0,14 | 0.15 | 0.53 | 1.13 |
| 120 | 0,08 | 0,10 | 0,13 | 0.12 | 0.51 | 1.18 |
| 135 | 0,07 | 0,08 | 0,09 | 0.1 | 0.47 | 1.26 |
| 150 | 0,05 | 0,05 | 0,06 | 0.08 | 0.46 | 1.36 |
| 165 | 0,03 | 0,03 | 0,04 | 0.07 | 0.4 | 1.41 |

| | | | | | | |
|---|---|---|---|---|---|---|
| Hkm = Haftklebmasse, die Nummer entspricht der zugrundeliegenden Zusammensetzung aus Tabelle 1 | | | | | | |

## Patentansprüche

1. Mehrschicht-Verbund, umfassend
zwei Folien, deren Hauptbestandteil ein Polyetheretherketon ist; und
eine Haftklebmasse, erhältlich durch thermische Vernetzung einer Zusammensetzung, enthaltend
a) mindestens ein Silikon, enthaltend mindestens zwei Alkenylgruppen;
b) mindestens ein Silikonharz;
c) mindestens eine zur Vernetzung Alkenylgruppen enthaltender Silikone geeignete Substanz, enthaltend mindestens zwei Si-H-Gruppen; und
d) mindestens eine zur Beschleunigung einer Reaktion der Si-H- mit den Alkenylgruppen geeignete Substanz,
**dadurch gekennzeichnet, dass** das stoffmengenbezogene Verhältnis der Summe der Si-H-Gruppen zur Summe der durch die Silikone a) und Silikonharze b) zur Verfügung gestellten Alkenylgruppen kleiner als 1:1 ist;
wobei die Haftklebmasse zwischen diesen Folien angeordnet ist.

2. Mehrschicht-Verbund gemäß Anspruch 1, **dadurch gekennzeichnet, dass** die aus der Zusammensetzung hergestellte Haftklebmasse bei Belastung mit 1.000 g einen Scherweg (23 °C, 15 min, bestimmt wie in der Beschreibung angegeben) aufweist, der um mindestens 5 % länger ist als der für diese Haftklebmasse unter identischen Messbedingungen minimal erzielbare Scherweg.

3. Mehrschicht-Verbund gemäß einem der vorstehenden Ansprüche, **dadurch gekennzeichnet, dass** die aus der Zusammensetzung hergestellte Haftklebmasse bei Belastung mit 1.000 g einen Scherweg (23 °C, 15 min, bestimmt wie in der Beschreibung angegeben) aufweist, der um mindestens 10 % länger ist als der für diese Haftklebmasse unter identischen Messbedingungen minimal erzielbare Scherweg.

4. Mehrschicht-Verbund gemäß einem der vorstehenden Ansprüche, **dadurch gekennzeichnet, dass** der Anteil der Gesamtheit aller Silikonharze b) an der Gesamtheit aller Silikone a) und aller Silikonharze b) maximal 75 Gew.-% beträgt.

5. Mehrschicht-Verbund gemäß einem der vorstehenden Ansprüche, **dadurch gekennzeichnet, dass** der Anteil der Gesamtheit aller Silikonharze b) an der Gesamtheit aller Silikone a) und aller Silikonharze b) mindestens 30 Gew.-% beträgt.

6. Mehrschicht-Verbund gemäß einem der vorstehenden Ansprüche, **dadurch gekennzeichnet, dass** das Silikonharz ein MQ-Harz ist.

7. Mehrschicht-Verbund gemäß einem der vorstehenden Ansprüche, **dadurch gekennzeichnet, dass** die Zusammensetzung mindestens ein Lösemittel enthält.

8. Mehrschicht-Verbund gemäß einem der vorstehenden Ansprüche, **dadurch gekennzeichnet, dass** der Maximalwert des Quotienten aus Verlustmodul (G") und Speichermodul (G') (tan δ; bestimmt mittels DMA, deformationsgesteuertes Rheometer, Platte-Platte, Deformation 1 %, Frequenz 10 rad/s) der Haftklebmasse im Temperaturbereich zwischen - 60 °C und 170 °C gleich oder größer als 0,8 ist.

9. Mehrschicht-Verbund gemäß einem der vorstehenden Ansprüche, **dadurch gekennzeichnet, dass** der Temperaturbereich innerhalb der Spanne von - 60 °C bis 170 °C, in dem der tan δ (bestimmt mittels DMA, deformationsgesteuertes Rheometer, Platte-Platte, Deformation 1 %, Frequenz 10 rad/s) der Haftklebmasse mindestens 0,5 beträgt, mindestens 80 K umfasst.

## Claims

1. Multi-layer composite comprising
two films whose main constituent is a polyetheretherketone; and
a pressure-sensitive adhesive compound obtainable by thermal crosslinking of a composition comprising a) at least one silicone comprising at least two alkenyl groups;
b) at least one silicone resin;
c) at least one substance suitable for crosslinking alkenyl-group-containing silicones and comprising at least two Si-H groups; and
d) at least one substance suitable for accelerating a reaction of the Si-H groups with the alkenyl groups,
**characterized in that** the amount-of-substance ratio of the sum total of the Si-H groups to the sum total of the alkenyl groups provided by the silicones a) and silicone resins b) is less than 1:1;
where the pressure-sensitive adhesive compound is disposed between these films.

2. Multi-layer composite according to Claim 1, **characterized in that** the pressure-sensitive adhesive compound produced from the composition has a shear travel (23°C, 15 min, determined as specified in the description) on loading with 1000 g which is longer by at least 5% than the minimally attainable shear travel for this pressure-sensitive adhesive compound under identical measuring conditions.

3. Multi-layer composite according to either of the preceding claims, **characterized in that** the pressure-sensitive adhesive compound produced from the composition has a shear travel (23°C, 15 min, determined as specified in the description) on loading with 1000 g which is longer by at least 10% than the minimally attainable shear travel for this pressure-sensitive adhesive compound under identical measuring conditions.

4. Multi-layer composite according to any of the preceding claims, **characterized in that** the proportion of the entirety of all silicone resins b) in the entirety of all silicones a) and all silicone resins b) is not more than 75 wt%.

5. Multi-layer composite according to any of the preceding claims, **characterized in that** the proportion of the entirety of all silicone resins b) in the entirety of all silicones a) and all silicone resins b) is at least 30 wt%.

6. Multi-layer composite according to any of the preceding claims, **characterized in that** the silicone resin is an MQ resin.

7. Multi-layer composite according to any of the preceding claims, **characterized in that** the composition comprises at least one solvent.

8. Multi-layer composite according to any of the preceding claims, **characterized in that** the maximum value of the quotient formed from loss modulus (G") and storage modulus (G') (tan δ; determined by means of DMA, deformation-controlled rheometer, plate/plate, deformation 1%, frequency 10 rad/s) of the pressure-sensitive adhesive compound in the temperature range between - 60°C and 170°C is greater than or equal to 0.8.

9. Multi-layer composite according to any of the preceding claims, **characterized in that** the temperature range within the interval from - 60°C to 170°C in which the tan δ (determined by means of DMA, deformation-controlled rheometer, plate/plate, deformation 1%, frequency 10 rad/s) of the pressure-sensitive adhesive compound is at least 0.5 encompasses at least 80 K.

## Revendications

1. Composite multicouche, comprenant
deux feuilles, dont le constituant principal est une polyétheréthercétone ; et
une masse adhésive sensible à la pression, pouvant être obtenue par réticulation thermique d'une composition contenant
a) au moins une silicone, contenant au moins deux groupes alcényle;
b) au moins une résine de silicone ;
c) au moins une substance convenant à la réticulation de silicones contenant des groupes alcényle, contenant au moins deux groupes Si-H ; et
d) au moins une substance convenant à l'accélération d'une réaction du Si-H avec les groupes alcényle,
**caractérisé en ce que** le rapport en masse de la somme du groupe Si-H à la somme des groupes alcényle mis à disposition par les silicones a) et les résines de silicone b) est inférieur à 1:1 ;
la masse adhésive sensible à la pression étant disposée entre ces feuilles.

2. Composite multicouche selon la revendication 1, **caractérisé en ce que** la masse adhésive sensible à la pression fabriquée à partir de la composition présente sous une charge de 1 000 g une distance de cisaillement (23 °C, 15 minutes, déterminée comme indiqué dans la description) qui est d'au moins 5 % plus longue que la distance de cisaillement minimale réalisable pour cette masse adhésive sensible à la pression dans des conditions de mesure identiques.

3. Composite multicouche selon l'une des revendications précédentes, **caractérisé en ce que** la masse adhésive sensible à la pression fabriquée à partir de la composition présente sous une charge de 1 000 g une distance de cisaillement (23 °C, 15 minutes, déterminée comme indiqué dans la description), qui est d'au moins 10 % plus longue que la distance de cisaillement minimale réalisable pour cette masse adhésive sensible à la pression dans des conditions de mesure identiques.

4. Composite multicouche selon l'une des revendications précédentes, **caractérisé en ce que** la proportion entre la totalité de toutes les résines de silicone b) et la totalité de toutes les silicones a) et toutes les résines de silicone b) est au maximum de 75 % en poids.

5. Composite multicouche selon l'une des revendications précédentes, **caractérisé en ce que** la proportion entre la totalité de toutes les résines de silicone b) et la totalité de toutes les silicones a) et la totalité des résines de silicone b) est d'au moins 30 % en poids.

6. Composite multicouche selon l'une des revendications précédentes, **caractérisé en ce que** la résine de silicone est une résine MQ.

7. Composite multicouche selon l'une des revendications précédentes, **caractérisé en ce que** la composition contient au moins un solvant.

8. Composite multicouche selon l'une des revendications précédentes, **caractérisé en ce que** la valeur maximale du rapport entre le module de perte (G") et le module de conservation (G') (tg δ ; déterminé par AMD, rhéomètre mécanique dynamique, plaques parallèles, déformation 1 %, fréquence 10 rad/s) de la masse adhésive sensible à la pression dans la plage de températures entre - 60 °C et 170 °C est supérieure ou égale à 0,8.

9. Composite multicouche selon l'une des revendications précédentes, **caractérisé en ce que** la plage de températures, dans la gamme de - 60 °C à 170 °C dans laquelle tg δ (déterminée par AMD, rhéomètre mécanique dynamique, plaques parallèles, déformation 1 %, fréquence 10 rad/s) de la masse adhésive sensible à la pression est d'au moins 0,5, est d'au moins 80 K.
